Europäisches Patentamt

European Patent Office

Office européen des brevets

(19)

(11) Veröffentlichungsnummer: **0 265 592**
**B1**

(12) **EUROPÄISCHE PATENTSCHRIFT**

(45) Veröffentlichungstag der Patentschrift: **16.01.91**

(51) Int. Cl.⁵: **B 65 G 13/071**

(21) Anmeldenummer: **87108538.7**

(22) Anmeldetag: **12.06.87**

(54) **Transportdeck für Stückgüter oder dergleichen.**

(30) Priorität: **30.10.86 DE 3637003**

(43) Veröffentlichungstag der Anmeldung:
**04.05.88 Patentblatt 88/18**

(45) Bekanntmachung des Hinweises auf die
Patenterteilung:
**16.01.91 Patentblatt 91/03**

(84) Benannte Vertragsstaaten:
**AT BE CH DE ES FR GB GR IT LI LU NL SE**

(56) Entgegenhaltungen:
**DE-A-2 521 465**
**DE-A-3 439 966**
**DE-B-2 261 936**

(73) Patentinhaber: **Lödige Fördertechnik GmbH**
**Friedrich-Böhlen-str.**
**D-3530 Warburg 2/Scherfede (DE)**

(72) Erfinder: **Stille, Volker**
**Niedensteiner Strasse 5**
**D-3507 Baunatal (DE)**

(74) Vertreter: **Elbertzhagen, Otto et al**
**Patentanwälte Thielking & Elbertzhagen**
**Gadderbaumer Strasse 20**
**D-4800 Bielefeld 1 (DE)**

EP 0 265 592 B1

Courier Press, Leamington Spa, England.

## Beschreibung

Die Erfindung bezieht sich auf ein Transportdeck für Stückgüter oder dergleichen, der im Gattungsbegriff des Patentanspruchs 1 näher bezeichneten Art.

Ein solches Transportdeck ist aus der DE—PS 34 39 966 bekannt. Dort sind allerdings die Platte oder die Plattensegmente, in deren Durchtrittsöffnungen die Kugeln geführt sind, gestellfest angeordnet. Es kann daher von den Wellen nur eine solche Wälzbewegung auf die Kugeln übertragen werden, die lediglich eine einzige Förderkomponente, nämlich in Richtung quer zu den Achsen der Antriebswellen, erzeugt.

In vielen Fällen besteht jedoch der Bedarf, das Transportgut nach linearer Heranförderung an einen bestimmten Punkt zwecks einer genaueren Positionierung über eine begrenzte Strecke seitlich verschieben zu können. Dies ist insbesondere bei der Handhabung von schweren Stückgütern mit glatter Bodenfläche der Fall, die nicht einfach von dem Transportsystem angehoben und in seitlicher Richtung justiert werden können.

Solche Probleme treten beispielsweise bei der Beladung von Lastkraftwagen oder Flugzeugen mit auf Paletten transportierten Gütern auf, um die Palette in Förderrichtung fluchtend mit dem Stellplatz oder einem übernehmenden Fördersystem ausrichten zu können.

Aus der DE—AS 22 61 936 ist zwar eine der gattungsgemäßen Transportvorrichtung ähnliche Fördereinrichtung bekannt, bei der die Förderrichtung geändert werden kann, jedoch sind dort die Kugeln nicht auf Wellen sondern auf Tellern gelagert, welche auf einer Lagerplatte angeordnet sind, die wiederum gegenüber der die Kugeln halternden Platte, welche auch dort ortsfest angeordnet ist, verschoben werden kann. Eine solche Vorrichtung ist aufwendig und insbesondere bereitet die Ableitung der von den Kugeln übertragenen Stützkräfte auf die Teller und deren Lagerplatte erhebliche Schwierigkeiten. Diese sogenannten Rechtwinkelstationen sind gemessen an der zu erzielenden seitlichen Verschiebung des Fördergutes für die genannten Zwecke viel zu teuer.

Bei anderen Verladesystemen verwendet man Hebebühnen, die über Gleitschienen hydraulisch seitlich verschoben werden können. In vielen Einsatzfällen ist jedoch eine Verschiebung der Gesamtbühne nicht immer möglich, denn oft sind solche Bühnen in Gruben eingebaut, die für eine einzige Ausrichtung der Bühne eingerichtet sind. Bei solchen Hebebühnen bestände auch die Möglichkeit, lediglich die Plattform der Bühne seitlich zu verschieben, jedoch kann hier für die Bedienungspersonen eine erhebliche Verletzungsgefahr auftreten, indem Körperteile eingequetscht werden.

Der Erfindung liegt deshalb die Aufgabe zugrunde, ein Transportdeck der eingangs genannten Art zu verbessern, indem zur seitlichen Verschiebung des auf den Kugeln getragenen Transportgutes senkrecht zu der Hauptförderrichtung über einen begrenzten Weg hinweg eine Förderkomponente übertragen werden kann.

Diese Aufgabe wird bei einem Transportdeck der gattungsgemäßen Art nach der Erfindung durch die kennzeichnenden Merkmale des Patentanspruchs 1 gelöst.

Der besondere Vorteil eines erfindungsgemäßen Transportdecks liegt darin, daß die Verschiebung der die Kugeln halternden Platte quer zur Hauptförderrichtung um eine begrenzte Wegstrecke mit sehr einfachen Mitteln verwirklicht werden kann. Dabei kommt noch zugute, daß bei einer Seitenverstellung der Platte deren Hub- und Justiergeschwindigkeit übersetzt an das Fördergut weitergegeben wird, denn wie sich aus der Kinematik der bei der Seitenjustierung sich in Achsrichtung auf den Wellen abwälzenden Kugeln ergibt, bewegt sich das Fördergut relativ zur Platte mit der doppelten Geschwindigkeit und legt den doppelten Weg zurück. So erreicht man beispielsweise mit einem Hub der die Kugeln führenden Platte aus einer Mittellage heraus zu beiden Seiten hin um je 100 mm eine maximale Seitenverschiebung des Fördergutes um 400 mm, was in den meisten praktischen Anwendungsfällen völlig ausreicht.

Zur Führung der Platte, die auch aus einzelnen, einstückig miteinander verbundenen Plattensegmenten bestehen kann, reicht es aus, entlang der Plattenränder untergreifende Gleitschienen vorzusehen, die noch durch quer zur Hauptförderrichtung liegende Träger unterstützt werden können, die oberseitig zur Auflage der Platte als Gleitelemente ausgestattet sind.

Die Querverschieblichkeit der Platte erfordert es, senkrecht zur Hauptförderrichtung liegende Führungen vorzusehen, über die longitudinal wirkende Kräfte, die also in Richtung der Hauptförderrichtung wirken, abgeleitet werden können. Diese Querführungen können vorzugsweise an den die Platte unterstützenden Querträgern vorgesehen werden.

Für die Querverschiebung der die Kugeln halternden Platte wird ein Linearantrieb beispielsweise in Gestalt eines Hydraulik- oder Pneumatikzylinders oder eines Spindelmotors eingesetzt, der so an der Platte angreift, daß auf die Platte wirkende Momente, die zu einer Verkantung führen könnten, vermieden werden. Dazu liegt der Angriffspunkt des Linearantriebs vorteilhaft in der senkrecht durch die Platte hindurchgehenden Quermittenebene, die rechtwinklig zur Hauptförderrichtung steht, oder zumindest nahe an dieser Quermittenebene. Im Falle mehrerer Linearantriebe oder mehrerer Kraftangriffspunkte an der Platte, kann auch eine zu der erwähnten Quermittenebene spiegelbildliche Anordnung vorgesehen werden.

Weitere vorteilhafte Ausgestaltungsmerkmale des Gegenstandes der Erfindung ergeben sich aus den Unteransprüchen.

Die Erfindung wird nachfolgend anhand der Zeichnung an einem Ausführungsbeispiel noch näher erläutert.

Dabei zeigen:

Fig. 1 die Draufsicht auf ein Transportdeck für Stückgüter,

Fig. 2 einen Teil-Querschnitt durch den Randbereich des Transportdecks nach Fig. 1,

Fig. 3 einen Teil-Längsschnitt durch das Transportdeck nach Fig. 1 im Bereich des mittigen Unterstützungsträgers,

Fig. 4 einen Teil-Querschnitt durch den Randbereich des Transportdecks nach Fig. 1 im Bereich des mittigen Unterstützungsträgers und

Fig. 5 die schematische Draufsicht auf ein Transportdeck anderer Ausführung.

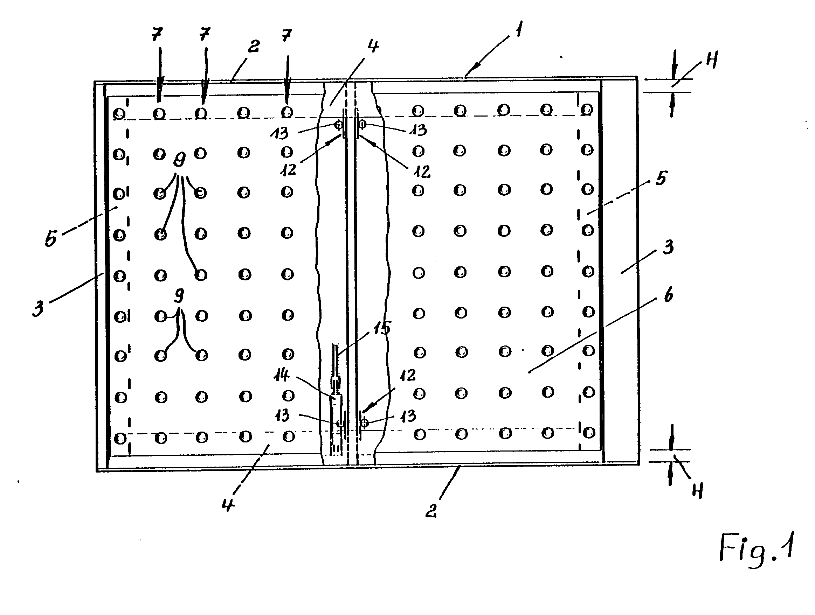

Das Transportdeck nach Figur 1 besitzt ein Gestell 1 mit nach Art eines Rahmens umlaufenden Trägern 2 und 3, die sich zu einem Rechteck ergänzen. Die in Längsrichtung liegenden Träger 2 besitzen einander an den Innenseiten gegenüberliegend in einer Ebene angeordnete Gleitschienen 4, die mit weiteren Gleitschienen 5 ebenengleich sind, welche an den quer zur Förderrichtung liegenden Trägern 3 nach innen hin vorstehend angeordnet sind.

Auf den jeweils einander gegenüberliegenden Gleitschienen 4 und 5 ist eine Platte 6 derart verschieblich gelagert, daß sie quer zu den in Längsrichtung liegenden Trägern 2 bewegt werden kann. Der aus einer Mittellage der Platte heraus zu beiden Seiten hin mögliche Verschiebehub ist in Figur 1 mit "H" gekennzeichnet. Die Richtung des Verschiebehubs "H" liegt quer zur Hauptförderrichtung des Transportdecks, worauf nachstehend näher eingegangen werden wird.

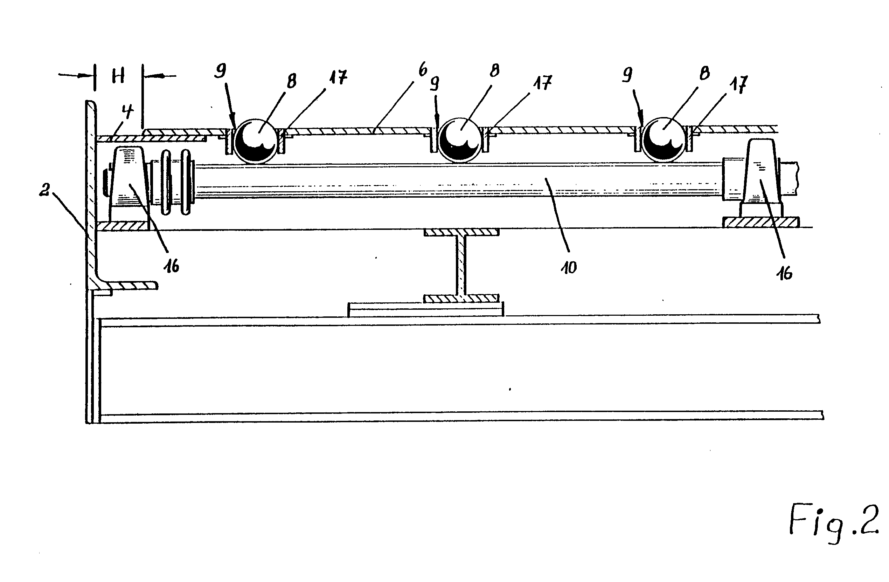

Für den Transport der Stückgüter besitzt das Deck über die Oberseite der Platte 6 nach oben vorstehende Kugeln 8, die in geradlinigen Querreihen 7 senkrecht zur Hauptförderrichtung angeordnet sind. Einzelheiten der Führung und Lagerung der Kugeln 8 erkennt man in Figur 2. Die Kugeln 8 treten mit ihrem Oberabschnitt durch Löcher 9 der Platte 6 hindurch, die von Führungshülsen 17 für die Kugeln 8 eingefaßt werden. Die auf dem Transportdeck geförderten Stückgüter sind mit einer solch ebenen Unterseite ausgebildet, daß sie lediglich mit den vorstehenden Kugelabschnitten und nicht mit der Platte 6 in Berührung kommen. Die dabei auf die Kugeln 8 ausgeübten Stützkräfte werden von je einer Welle 10 aufgenommen, die unter jeder Querreihe 7 (Figur 1) der Kugeln 8 angeordnet ist. Die Achse der Welle 10 liegt dabei in derjenigen Vertikalebene, die durch die Mitte sämtlicher Kugeln 8 einer Kugelreihe 7 hindurchgeht. Folglich stehen die Kugeln 8 längs einer Scheitellinie auf der betreffenden Welle 10 auf, die parallel zu der Oberseite der Platte 7 in darunterliegenden Stützkörpern 16 gelagert ist. Es versteht sich, daß die Vielzahl der Wellen 10, von denen jede einer der Kugelreihen 7 zugeordnet ist, synchron angetrieben werden, wobei den Kugeln 8 sämtlich eine in der Hauptförderrichtung liegende Wälzrichtung aufgezwungen wird. Mit dieser Wälzbewegung rollen die Kugeln 8 an den Unterseiten der Stückgüter ab, die somit über den Antrieb durch die Wellen 10 parallel zu den Längsträgern 2 des Transportdecks bewegt werden.

Die Verschieblichkeit der Platte 6 dient nun dazu, die Kugeln 8 entlang eines begrenzten Weges der dem doppelten Hub "H" entspricht, längs der Scheitellinien der Wellen 10 zu bewegen. Dabei wird den Kugeln 8 eine Wälzkomponente aufgezwungen, die senkrecht zur Hauptförderrichtung steht und die entsprechend eine Bewegung der auf den Kugeln 8 aufgelagerten Stückgüter senkrecht zur Hauptförderrichtung bedingt. Dabei werden die Stückgüter um den doppelten Weg und mit doppelter Geschwindigkeit der Querverschiebebewegung der Platte 6 in seitlicher Richtung versetzt.

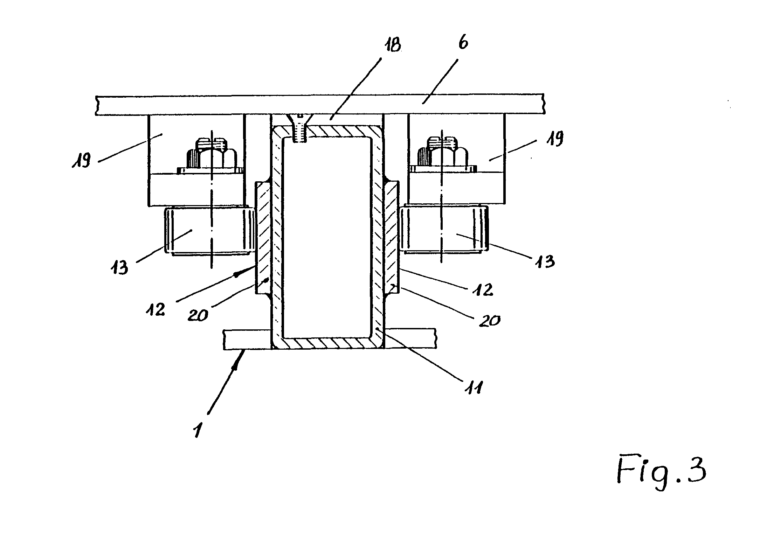

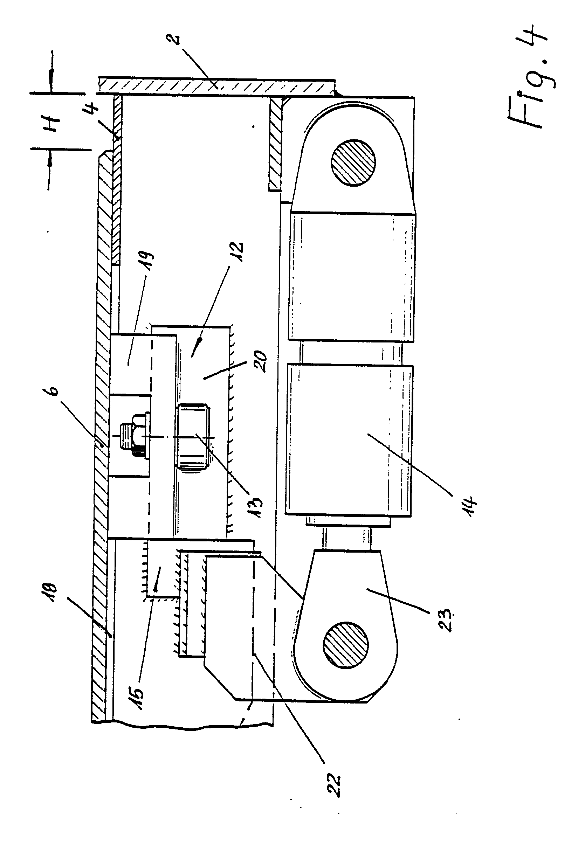

Für die Querverschiebung muß die Platte 6 geführt und entsprechend angetrieben werden. Wie Figur 1 dazu veranschaulicht, ist unter der Quermitte der Platte 6 ein Querträger 11 gestellfest angeordnet, der oberseitig einen Gleitbelag 18 haben kann, wie die Figuren 3 und 4 zeigen. Darauf stützt sich die Platte 6 jedoch nicht nur gegen ein Durchhängen in Vertikalrichtung ab, sie ist vielmehr an dem Querträger 11 auch zur Aufnahme von Longitudinalkräften geführt. An seinen in Querrichtung des Transportdecks liegenden Längsseiten besitzt der Querträger 11 Geradführungen 12, die aus außenseitig auf den Träger 11 aufgesetzten Platten 20 bestehen können, wie Figur 3 näher zeigt. Diese Platten 20 können leicht mit einer planebenen Außenseite ausgestattet werden. Wie weiter den Figuren 3 und 4 zu entnehmen ist, sind unterseitig an der Platte 6 über Trägerlaschen 19 zueinander achsparallele Führungsrollen 13 gelagert, deren Achsen senkrecht auf der Ebene der Platte 6 stehen und die den Träger 11 beidseits nach unten hin übergreifen und sich an den beidseits daran vorhandenen Führungsplatten 20 abstützen. Eine solche Führungsvorrichtung mit den Führungsrollen 13 und den Längsführungen 12 ist nahe den beiden Längsrändern unterseitig an der Platte 6 vorgesehen. Erforderlichenfalls können auch mehrere solche Querträger 11 im Gestell 1 des Transportdecks angeordnet werden, sofern eine Unterstützung und Führung der Platte 6 an mehreren Stellen erforderlich ist. Dabei ist es selbstverständlich, daß die Oberseiten der Querträger 11 mit den gegebenenfalls darauf vorhandenen Gleitelementen 18 mit den randlichen Gleitschienen 4 und 5 an den Längs- und Querträgern 2 und 3 in einer Ebene liegen.

Der Antrieb für die Querverschiebung der Platte 6 parallel zu den Kugelreihen 7 und den Wellen 10 geht im einzelnen aus den Figuren 1 und 4 hervor. An dem einen der gestellfesten Längsträger 2 ist ein Hubzylinder 14 gelagert, dessen hubausführendes Element 23 über eine Mitnehmerkonstruktion 22 mit der Lasche 19 an der Platte 6 oder unmittelbar mit der Platte 6 verbunden ist. Dabei ist der Verbindungspunkt 15 zwischen der Platte 6 und dem hubausführenden Element 23 des Hubzylinders 14 so gelegt, daß die Platte 6 möglichst verkantungsfrei bewegt werden kann. Das erfordert, daß der Verbindungspunkt 15 in der senkrecht durch die Platte 6 hindurchgehenden Quermittelebene oder doch möglichst nahe an dieser Quermittenebene liegt. Damit bei Störungen die Seitenverstellung der platte 6 nicht beeinträchtigt ist, kann der Hubzylinder 14 entkoppelbar mit der Platte 6 verbunden sein, so daß die auf den Kugeln 8 des Transportdecks ruhenden Stückgüter manuell quer zur Hauptförderrichtung verschoben werden können.

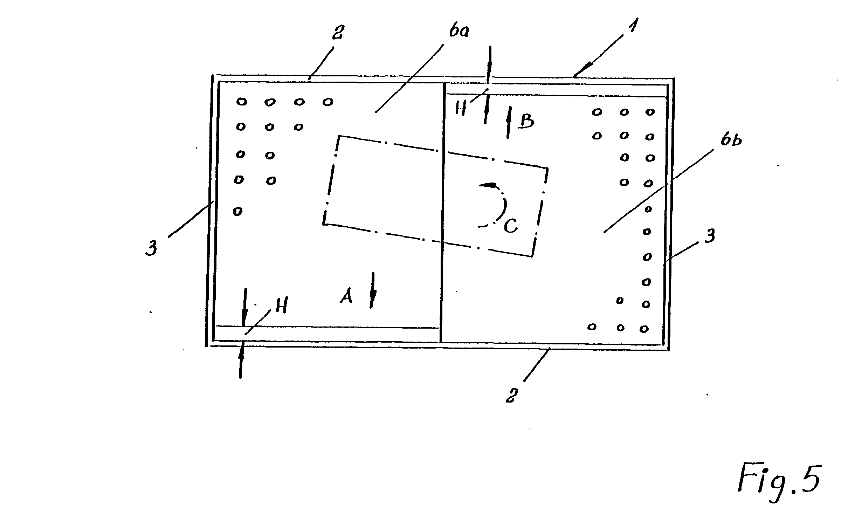

Fig. 5 zeigt ein Transportdeck, das zwei Plattenabschnitte 6a und 6b besitzt, die je für sich quer zur Förderrichtung verschieblich sind. In dieser Transportrichtung liegen die beiden Plattenabschnitte 6a und 6b hintereinander, so daß infolge der getrennten Verschieblichkeit ein etwa zur Hälfte auf den beiden Plattenabschnitten 6a und 6b aufstehendes Fördergut im begrenzten Umfange ausgerichtet werden kann. So ist in Fig. 5 durch strichpunktierte Linien schematisch eine Palette wiedergegeben, die sich etwa in der Mitte des gesamten Transportdecks befindet und eine leichte Schrägstellung zur Förderrichtung einnimmt. Diese Schrägstellung kann nun dadurch korrigiert werden, daß der eine Plattenabschnitt 6a in Richtung des Pfeiles A und der zweite Plattenabschnitt 6b in Richtung des Pfeiles B verschoben wird, wobei die Palette dann eine Drehung in Richtung des Pfeiles C ausführt. Es versteht sich, daß die Plattenabschnitte 6a und 6b auch synchron miteinander in seitlicher Richtung verschoben werden können, sofern eine solche Ausrichtung des jeweilig darauf geführten Stückgutes nicht erforderlich ist.

Unabhängig davon können durch eine geeignete Antriebssteuerung unterschiedlich resultierende Bewegungen dem Fördergut aufgezwungen werden. So kann der Transport des Fördergutes in der Haupttransportrichtung getrennt von dem Querversetzen vorgenommen werden, wobei das Fördergut auf dem Transportdeck rechtwinklig zueinander stehende Wegstrecken durchläuft. Zum anderen kann die Bewegung des Fördergutes in der Hauptförderrichtung und die Querverschiebung senkrecht dazu auch gleichzeitig erfolgen, dann durchläuft das Fördergut einen etwa S-förmig gekrümmten Weg. Dies ist insbesondere dann der Fall, wenn die Querverschiebung nur während eines begrenzten Förderabschnittes der Längsförderung überlagert wird.

**Patentansprüche**

1. Transportdeck für Stückgüter oder dergleichen mit diese unmittelbar unterstützenden Kugeln (8), die in geradlinigen, zueinander parallelen Kugelreihen (7) quer zur Förderrichtung angeordnet und unterhalb einer Platte (6) auf sie tragenden, zylindrischen Antriebswellen (10), welche mittig unter den Kugelreihen angeordnet sind, unmittelbar aufgelagert sind, wobei die Kugeln über die Plattenoberseite vorstehen und in Durchtrittsöffnungen (9) der Platte geführt sind, dadurch gekennzeichnet, daß die Platte (6) parallel zur Achsrichtung der Wellen (10) verschieblich ist.

2. Transportdeck nach Anspruch 1, dadurch gekennzeichnet, daß die Platte (6) quadratisch oder rechteckig ist und zumindest an den quer zur Verschieberichtung liegenden Seiten durch gestellfeste Gleitschienen (4) unterstützt ist, deren Breite größer als der Verschiebehub ist.

3. Transportdeck nach Anspruch 1 oder 2, dadurch gekennzeichnet, daß unter der Platte (6) ein oder mehrere parallel zu den Wellen (10) sich erstreckende, gestellfeste Träger (11) angeordnet sind, auf denen sich die Platte (6) gleitend abstützt.

4. Transportdeck nach Anspruch 3, dadurch gekennzeichnet, daß der Träger (11) in der Verschieberichtung liegende Geradführungen (12) hat, die mit Führungselementen (13) an der Unterseite der Platte (6) zusammenwirken.

5. Transportdeck nach Anspruch 4, dadurch gekennzeichnet, daß die Führungselemente (13) Rollen sind, die beidseits an den die Geradführung (12) bildenden Längsseiten der Träger (11) anliegen.

6. Transportdeck nach einem der Ansprüche 1—5, dadurch gekennzeichnet, daß die Platte (6) mit einem gestellfest gegengelagerten Linearantrieb (14) verbunden ist.

7. Transportdeck nach Anspruch 6, dadurch gekennzeichnet, daß der Verbindungspunkt (15) oder die Verbindungspunkte zwischen dem Linearantrieb (14) und der Platte (6) auf oder nahe an der in Verschieberichtung liegenden Mittellinie der Platte (6) oder symmetrisch dazu liegen.

8. Transportdeck nach Anspruch 6 oder 7, dadurch gekennzeichnet, daß der Linearantrieb (14) ein unter der Platte (6) angeordneter Hubzylinder oder Spindelmotor ist.

9. Transportdeck nach einem der Ansprüche 6—8, dadurch gekennzeichnet, daß die Platte (6) und der Linearantrieb (14) entkoppelbar sind.

10. Transporteck nach einem der Ansprüche 1—9, dadurch gekennzeichnet, daß die Platte (6) in zwei in der Förderrichtung hintereinander liegende Abschnitte (6a, 6b) unterteilt ist, die je für sich parallel zur Achsrichtung der Wellen (10) verschieblich sind.

**Revendications**

1. Convoyeur de petites marchandises ou similaires, à billes (8) de support direct, alignées en vis-à-vis et en rangs (7) parallèles, perpendiculaires au sens du transport, sous une plaque (6) et sur des cylindres de support et d'entraînement, dans l'axe des rangs de billes. Les billes font saillie à la surface de la plaque par des ouvertures (9) pratiquées dans la plaque de telle sorte que celle-ci (6) se déplace parallèlement à l'alignement axial des arbres (10).

2. Convoyeur d'après la revendication numéro 1, caractérisé par le fait que la plaque (6) est carrée ou rectangulaire et soutenue par des glissières (4) fixées au bâti, pour le moins sur les côtés perpendiculaires au sens de translation. La largeur de ces glissières est supérieure à l'élévateur de déplacement.

3. Convoyeur d'après les revendications 1 ou 2, caractérisé par le fait que, sous la plaque (6), sont disposés un ou plusieurs supports (11) fixés au bâti et parallèles aux arbres (10). La plaque (6), en glissant, repose sur ces supports.

4. Convoyeur d'après la revendication numéro 3, caractérisé par le fait que le support (11) possède des guides droits (18) dans le sens de translation. Ces guides agissent en liaison avec des éléments de guidage (13) situés sous la plaque (6).

5. Convoyeur d'après la revendication numéro 4, caractérisé par le fait que les éléments de guidage (13) sont des roulettes appliquées contre chacun des grands côtés des supports (11) de guidage droit (12).

6. Convoyeur d'après l'une des revendications 1—5, caractérisé par le fait que la plaque (6) est liée à un système d'entraînement linéaire (14), fixé au bâti, sur le côté opposé.

7. Convoyeur d'après la revendication numéro 6, caractérisé par le fait que le point de jonction (15) ou les points de liaison entre l'entraînement linéaire (14) et la plaque (6) se trouvent au-dessus, près ou symétriques de la ligne médiane de la plaque (6), dans le sens de translation.

8. Convoyeur d'après les revendications 6 et 7, caractérisé par le fait que le système d'entraînement linéaire (14) est constitué par un cylindre de levage ou un moteur à arbre sous la plaque (6).

9. Convoyeur d'après l'une des revendications 6—8, caractérisé par le fait que plaque (6) et système d'entraînement linéaire (14) peuvent être découplés.

10. Convoyeur d'après l'une des revendications 1—9, caractérisé par le fait que la plaque (6) est divisée en deux parties se suivant (6a, 6b), dans le sens de translation, chacune d'elles pouvant se déplacer parallèlement à l'alignement axial des arbres (10).

**Claims**

1. Transport deck for unit loads or the like having balls (8) directly supporting said unit loads, which balls are arranged transversely in relation to the conveying direction in straight, mutually parallel rows (7) of balls and are mounted directly below a plate (6) on cylindrical drive shafts (10) bearing said plate, which drive shafts are arranged centrally below the rows of balls, the balls projecting above the top side of the plate and being guided in perforations (9) of the plate, characterized in that the plate (6) is displaceable parallel to the axial direction of the shafts (10).

2. Transport deck according to Claim 1, characterized in that the plate (6) is square or rectangular and is supported at least on the sides situated transversely in relation to the displacement direction by slide rails (4) which are fixed to the frame and the width of which is greater than the displacement path.

3. Transport deck according to Claim 1 or 2, characterized in that one or more supports (11) are arranged below the plate (6), which supports are fixed to the frame, extend parallel to the shafts (10) and on which the plate (6) is supported in a sliding manner.

4. Transport deck according to Claim 3, characterized in that the support (11) has straight guides (12) which are situated in the displacement direction and which interact with guide elements (13) on the underside of the plate (6).

5. Transport deck according to Claim 4, characterized in that the guide elements (13) are rollers which bear on both sides against the longitudinal sides of the support (11) forming the straight guide (12).

6. Transport deck according to one of Claims 1—5, characterized in that the plate (6) is connected to an end-mounted linear drive (14) which is fixed to the frame.

7. Transport deck according to Claim 6, characterized in that the connection point (15) or the connection points between the linear drive (14) and the plate (6) are situated on or near to the central line of the plate (6), situated in the displacement direction, or symmetrically to said central line.

8. Transport deck according to Claim 6 or 7, characterized in that the linear drive (14) is a lifting cylinder or spindle motor arranged below the plate (6).

9. Transport deck according to one of Claims 6—8, characterized in that the plate (6) and the linear drive (14) can be decoupled.

10. Transport deck according to one of Claims 1—9, characterized in that the plate (6) is subdivided into two sections (6a, 6b) situated one after the other in the conveying direction, which sections are separately displaceable parallel to the axial direction of the shafts (10).

Fig.1

EP 0 265 592 B1

Fig.2

Fig. 3

Fig. 4

Fig.5

EP 0 265 592 B1